# EUROPEAN PATENT APPLICATION

(11) **EP 4 813 605 A1**
(43) Date of publication of application: **30.09.2026**
(21) Application number: 25165772.2
(22) Date of filing: 24.03.2025
(51) Int. Cl.: B29C 45/26, B29C 45/33, B29C 45/44, A61M 39/10, B29C 45/36, B29L 31/24

(54) **INJECTION MOLDING TOOL FOR PRODUCING A MOLDED PART**

(71) Applicant: Primaform AG, 3608 Thun (CH)
(72) Inventor: Matt, Markus, 3604 Thun (CH); Feller, Jonathan, 3005 Bern (CH); Richli, Simon, 3700 Spiez (CH)
(74) Representative: Keller Schneider Patent- und Markenanwälte AG

(57) **Abstract**

An injection molding tool (100) for producing a molded part (1) comprises:
- An injection mold (110) with a cavity (120) to define an outer shape of the molded part (1), the cavity (120) having a first opening at a first end and a second opening at a second end opposite to the first end.
- A threading insert (130), penetrating the first opening of the cavity (120) in a closed configuration of the injection molding tool (100), the threading insert (130) comprising a first threaded section to define a thread on the molded part, the threading insert being axially movably, and in particular rotationally movably, mounted with respect to the cavity (120) for being retractable from the molded part (1) into a disengaged configuration of the threading insert (130), wherein the threading insert (130) is disengaged from the molded part in the cavity (130).
- A mold closure (160) for closing the second opening of the cavity (120) in the closed configuration of the injection molding tool (100), the mold closure (160) comprising a movably mounted demolding element (161), in particular a demolding core (161), that is configured to move the molded part (1) out of the cavity (120) in a demolding operation.
- An injection opening (129) for injecting fluid material into the cavity (120), the injection opening being placed between the first and the second end of the cavity (120) on a wall segment of the cavity (120) defining an outer lateral surface section of the molded part (1).
- A feed channel (51) leading to the injection opening (129) for transporting the fluid material to the cavity (129), wherein the feed channel (51) is either a hot runner (51) or a cooled runner.

## Description

### Technical field

The invention relates to an injection molding tool for producing a molded part.

### Background art

Injection molding is a well known and widely used manufacturing technique to produce parts using molds for fluid material. Such a process usually involves forcing molten plastic or rubber material under high pressure into a mold, defining a shape of the part to be produced, and consecutively letting the material harden within the mold.

Known devices for injection molding usually comprise an injection unit, in particular with a heater to heat up, e.g. a thermoplastic material like resin pellets. These injection units e.g. comprise a screw to move the melting pellets and the resulting fluid material towards and into a mold. Such a mold usually comprises at least two mold halves, one halve at the injection side being connected to the injection unit and one halve at the ejection side opposite to the injection side. The mold opposite to the injection unit is usually connected to a powerful and large closing unit, also called a clamp.

For the definition of voids, recesses, through holes and inner geometries of the parts, conventional devices may additionally include cores that are inserted into the mold.

Between shape defining parts of the mold and the injection unit usually a runner channel lets the material pass through the mold and to the cavities.

At the beginning of a conventional molding process, usually the mold halves are pressed together using the closing unit. Then, the injection unit forces the fluid material into the mold and through the runner channel with high pressure. Subsequently, the material is left to cool down and harden within the mold.

Such a molding process usually ends with a demolding step, where the part is retrieved from the mold for further processing like e.g. cutting, coating and/or packaging.

Conventional devices for injection molding and corresponding processes have several drawbacks: The mold halves need to be forced together with large, e.g. hydraulically or electrically operating, closing units that take up significant production space. In many applications, e.g. when manufacturing medical products, the devices need to be placed in a clean room environment, which means that the costs for the production space and cubature are particularly high. Additionally, conventional closing units display a significant power consumption. The large footprint of the closing units together with their low movement speed also renders it difficult to reduce production cycle times and to speed up the production.

During the production of molded parts with threads, e.g. internal threads within recesses, demolding often requires a use of robots or handling devices to e.g. remove the part from a correspondingly threaded mold component or for further transportation to an assembly line, causing additional process complexity, increased need for production area and increased power consumption.

Especially for comparatively small threaded parts, like fittings, in particular Luer lock fittings, or e.g. pencil tip cones, which are also conventionally produced within these large devices with comparatively large molds, the power and complexity of conventional devices for injection molding represents a waste of energy, space and cubature.

Further, during injection molding of small parts, excess material within sprue and runner channels usually hardens alongside the molded part and needs to be cut off after or during demolding. This introduces the need for further processing and additional equipment.

### Disclosure of the invention

The object of the invention is to provide an injection molding tool and a corresponding process that require less production space, are energy-efficient and flexible and simplify the production process of molded parts, in particular of comparatively small molded parts with threads.

To solve this problem, the injection molding tool comprises:
- an injection mold with a cavity to define an outer shape of the molded part, the cavity having a first opening at a first end and a second opening at a second end opposite to the first end;
- a threading insert, penetrating the first opening of the cavity in a closed configuration of the injection molding tool, the threading insert comprising a first threaded section to define a thread on the molded part, the threading insert being axially movably, and in particular rotationally movably, mounted with respect to the cavity for being retractable from the molded part into a disengaged configuration of the threading insert, wherein the threading insert is disengaged from the molded part in the cavity;
- a mold closure for closing the second opening of the cavity in the closed configuration of the injection molding tool, the mold closure comprising a movably mounted demolding element, in particular a demolding core, that is configured to move the molded part out of the cavity in a demolding operation;
- an injection opening for injecting fluid material into the cavity, the injection opening being placed between the first and the second end of the cavity on a wall segment of the cavity defining an outer lateral surface section of the molded part; and
- a feed channel leading to the injection opening for transporting the fluid material to the cavity, wherein the feed channel is either a hot runner or a cooled runner.

Another aspect of the invention is a process for the production of a molded part through injection molding, comprising the steps of:
- providing an injection molding tool, the injection molding tool, in particular an injection molding tool according to the invention, comprising:
   ∘ an injection mold with a cavity;
   ∘ a threading insert with a first threaded section to define a thread on the molded part;
   ∘ a demolding element opposite to the threading insert;
   ∘ an injection opening on a wall segment of the cavity defining an outer lateral surface section of the molded part; and
   ∘ a feed channel leading to the injection opening, wherein the feed channel is either a hot runner or a cooled runner;
- bringing the injection molding tool into a closed configuration;
- injecting fluid material into the cavity through the injection opening;
- after the material is hardened, retracting the threading insert from the molded part;
- moving the molded part through an opening of the cavity by moving the demolding element; and
- ejecting the molded part off the demolding element.

The molded part is the product of a molding process and consists of one or more hardened materials in particular thermoplastic and/or thermosetting polymers and/or elastomers like silicone. The molded part may e.g. be a Luer lock fitting or a pencil tip cone.

The molded part produced comprises a lateral surface, in particular between two opposing free ends of the molded part. In particular, the lateral surface has a local surface normal that points away from a symmetry axis to which the molded part is essentially rotationally symmetrical. The mentioned rotational symmetry may also be a discrete symmetry for certain angles of rotation, like it is e.g. the case for a hexagonal prism shape. In particular, the lateral surface has a local surface normal that is orthogonal to a threading axis of the threading insert while the molded part is within the cavity. The molded part can e.g. be tube shaped or partially tube shaped. The molded part that is produced from the inventive injection molding tool features at least one thread.

The molded part is produced by letting the fluid material, in particular thermoplastic and/or thermosetting polymers, harden, e.g. through cooling, in particular cooling below a freezing temperature of the material. The fluid material can be produced by melting material pellets within an injection unit. These units themselves are known.

In a further variant, called liquid silicone rubber (LSR) injection molding, the fluid LSR material is an elastomer, that in particular comprises two fluid components which, above a certain temperature, react by cross linking through addition-vulcanisation to form a solid material. In this case, the fluid LSR material within the cavity hardens by sufficiently heating the cavity. In this case, the feed is actively cooled to hinder premature cross linking.

The inventive injection molding tool is in particular connectable to an injection unit to form an injection molding system, wherein the injection unit preferably comprises a heating system to melt material pellets and transport means, e.g. a screw, to transport the fluid material into the injection molding tool. In another variant, in particular for LSR-injection molding, the injection unit comprises a mixer to mix two fluid components of the fluid LSR material together to form the fluid material and a cooled screw for transportation of the fluid material.

The injection mold is preferably made of one piece of metal, e.g. steel, in particular hardened steel, aluminium or beryllium copper. In particular, a smallest enveloping cuboid of the injection mold fully contains the cavity, i. e. the cavity is fully contained within the outer walls of the injection mold.

Besides the cavity and e.g. a cut out for the feed channel, the injection mold preferably comprises at least one cooling channel to guide a cooling liquid, like cooling oil or cooling water, to cool down the fluid material within the cavity or at least one heating channel or heating wire to sufficiently heat up the fluid material within the cavity.

The cavity is preferably made up of dedicated wall sections of the injection mold that at least partially enclose an empty volume. In particular, the cavity, apart from the first and the second opening and the injection opening, is fully enclosing an empty volume. These wall sections are impermeable for the fluid material to form the molded part. In particular, the cavity is formed from wall sections of a through hole within the injection mold. Such a through hole can feature sections with differing diameter and also e.g. further structures like bridges or notches.

During a molding process, the cavity is filled with fluid material, which is then hardening within the cavity and thereby adapting an outer shape that essentially corresponds to a negative of the cavity.

The injection molding tool has a closed configuration in which a volume within the cavity is, apart from the injection opening(s) during injection, fully enclosed. This means that fluid material within this volume is fully confined within the cavity, except at the injection opening(s), through which the fluid material is forced into the cavity.

The first and the second end of the cavity are opposing outer regions of the cavity. In particular, the first and/or the second end of the cavity comprises a region that corresponds to a free end of the molded part within the cavity. Preferably, the first end and the second end oppose each other with respect to a centroid of the volume that is enclosed by the cavity. Preferably, the cavity has a cylindrical shape with the first and the second end being longitudinal ends of the cavity.

The first opening and the second opening are openings towards an interior of the cavity, in particular from outside of the injection mold. They serve as access for other components of the injection molding tool, apart from the injection mold itself, like the threading insert and the demolding element. The openings also provide a path for the molded part out of the cavity and out of the injection mold.

In the closed configuration of the injection molding tool, the first and the second opening are closed such that they are impermeable for the fluid material.

Preferably, the first and/or the second opening of the cavity has an outer shape that corresponds to a largest cross sectional shape of the cavity in a plane that is parallel to the plane of the respective opening.

In particular, outside of the cavity, adjacent to the first and the second opening, the injection mold features accommodation spaces for other components of the injection molding tool, like for the threading insert and the mold closure (see below).

The threading insert preferably comprises or is entirely made of the same material as the injection mold, e. g. steel, in particular hardened steel, aluminium or beryllium copper. The threading insert is in particular mounted movably longitudinally along a threading insert axis. In particular, the threading insert is mounted movably along a threading axis of the threaded section. The threading insert preferably comprises a cylindrical shaft where the threaded section is arranged on a first free end of the cylindrical shaft and a second end opposing the first free end of the cylindrical shaft is arranged outside of the cavity, preferably also in a closed configuration of the injection molding tool.

In particular, the threading insert comprises a retracting thread that engages with a mounted holding thread to move the threading insert along its axis when the threading insert rotates. When the threading insert is not moving, the retracting thread can guide axial forces applied to the threading insert further onto the holding thread, thereby axially fixing and securing the threading insert against axial forces, in particular pressure forces from the fluid material.

For the threading insert to rotate, the injection molding tool preferably comprises a gear wheel that surrounds the threading insert outside of the injection mold and is mounted rotatably. The gear wheel can e.g. be driven to rotate by means of an electrical motor. Preferably, the threading insert is mounted slidably within the gear wheel. The threading insert can e.g. comprise a non-axisymmetric section (e.g. two opposing flat sections) engaging with an inner surface of the gear wheel, thereby translating rotations of the gear wheel onto the threading insert.

The threading insert being retractable means in particular that the threading insert can be moved in a direction that is pointing outwards of the cavity. The threading insert is retractable from the hardened molded part into the disengaged configuration of the threading insert after a molding process, such that the threading insert is no longer engaging with the molded part within the cavity and that the molded part is movable relative to the threading insert.

Preferably, the threading insert is rotatably mounted such that it can rotate while being retracted from the molded part to unscrew from the molded part. Alternatively, at least a part of the threading insert, in particular the threaded section of the threading insert, is collapsible or expandable such that the threaded section can disengage from the molded part by collapsing or expanding before the threading insert is retracted into the disengaged configuration of the threading insert.

Preferably, in a sealing part of the threading insert, the threading insert has a diameter that corresponds to a diameter of the first opening. The sealing part preferably at least comprises a section of the threading insert that fills the first opening of the cavity when the injection molding tool is in the closed configuration. Thereby, the threading insert seals the first opening of the cavity in the closed configuration of the injection molding tool.

At the start of a molding process, the threading insert is penetrating the first opening to reach into the cavity of the injection mold and remains there during injection and hardening of the fluid material. At the start of a demolding operation the threading insert is then retracted from the molded part into the disengaged configuration.

The mold closure closes the second opening of the cavity in the closed configuration of the injection molding tool, making the second opening impermeable for fluid material within the cavity. In particular, the mold closure comprises wall sections that extend in an angle with respect to an axis of the cavity and also with respect to a threading axis of the threading insert. Hence, during molding processes the mold closure becomes in particular subject to axial pressure forces from the fluid material inside of the cavity. Preferably, a shape of a contact surface of the mold closure matches a shape of a closing region of the injection mold outside of the second opening of the cavity. Thereby the mold closure ascertains a good closing of the cavity against any leakage.

During a molding process, the demolding element serves as a mold, in particular within the cavity. Thus, in the closed configuration of the injection molding tool, the demolding element in particular comprises wall sections that are placed within the cavity and come into contact with the fluid material. Alternatively, the demolding element can comprise a recess into which fluid material can enter.

If the demolding element is a demolding core, it is at least partially shaping a recess or through hole within the molded part. The demolding element is in particular essentially cylindrically shaped. A shaping part of the demolding element corresponds to a negative of a section of the molded part, in particular an end section.

Preferably, the demolding element comprises a holding section, wherein the holding section is asymmetric with respect to axial rotations around a threading axis of the threading insert. The holding section can e.g. be gear-wheel shaped or have a hexagonal prism shape. Thereby the demolding element can secure the molded part against rotation, while the threading insert is being unscrewed. Alternatively, the cavity can comprise a holding contour, e.g. a bridge or a groove, in particular a bridge or a groove parallel to the threading axis, to secure the molded part against rotation about the threading axis, while the threading insert is being unscrewed from the molded part.

To create and control a movement of the demolding element and, in particular also relative movements of other components of the mold closure, the demolding element is preferably coupled with a movably mounted control link. The movably mounted control link in particular comprises a plate with a slot, wherein a connecting member of the demolding element is in slidable engagement with the slot and wherein the control link is mounted movably in a direction orthogonal to the direction of movement of the demolding element.

The demolding operation of the demolding element involves moving the demolding element together with the molded part attached to the demolding element out of the cavity. Preferably, the demolding element is movable together with the rest of the mold closure, but the demolding element can also be movable relative to surrounding members of the mold closure, allowing e.g. first moving an outer part of the mold closure away from the cavity and then moving the remaining demolding element together with the molded part out of the cavity.

The injection opening allows an injection of fluid material into the cavity at least when the injection molding tool is in the closed configuration. The injection opening in particular is an opening in the walls of the cavity inside the injection mold. The injection opening is in particular a side gate.

The injection opening in particular only makes up less than 20%, preferably less than 10%, of a total wall surface of the cavity. In particular, the injection opening is a circular opening in the wall segment of the cavity. Preferably, a diameter of the injection opening is less than 20%, in particular less than 10%, of a largest diameter of the cavity, measured at the place of the injection opening and perpendicular to an axis of the demolding element.

The feed channel is a guiding channel for the fluid material, guiding the fluid material to the cavity and in particular, preserving the temperature of the fluid material.

One variant of the feed channel is a hot runner. The hot runner is in particular a heatable channel that is able to heat the fluid material sufficiently to remain in its fluid state during injection and also during the hardening of the molded part within the cavity. For this purpose, the hot runner preferably comprises electrical heating wires. During a molding process, the hot runner is preferably heated to a temperature above a surface temperature of the cavity.

Another variant of the invention is a feed channel that is a cooled runner. The cooled runner is in particular an actively coolable channel that is able to cool fluid material sufficiently to remain in its fluid state during injection and also during the hardening of the molded part within the cavity. The cooled channel is in particular suited for molding processes with a material that remains in fluid state, when sufficiently cold, like injection molding using liquid silicone rubber (LSR) material.During a molding process, the cooled runner is preferably cooled to a temperature below a surface temperature of the cavity, while the cavity may e.g. be heated using electrical wires.

The feed channel may be housed in a feed channel unit or be a part of the injection mold. In particular, the feed channel is thermally insulated from the cavity, e.g. by an insulation layer. The feed channel may be arranged within a feed channel unit inserted into a feed channel cut out within the injection mold. This feed channel cut out e.g. may have essentially the shape of a cylindrical through hole within the injection mold that tapers towards the injection opening. The feed channel unit may e.g. comprise a casing with an outer shape corresponding to such a cut out, wherein heating wires (in case of the feed channel being a hot runner) or cooling channels (in case of the feed channel being a cooled runner) and a tubular guiding channel are arranged within the casing. Alternatively, the feed channel may comprise a wall section of the injection mold, with heating wires or cooling channels placed e.g. directly into the injection mold.

The injection molding process can be described as follows:
Initially the injection molding tool is brought into the closed configuration. This step comprises all actions and movements to close the cavity. In particular in the closed configuration of the injection molding tool, the space inside the cavity is a complete negative of the part to be produced (except for any injection openings).

In a following step, the fluid material is injected into the cavity through the heated hot runner or a cooled down cooled runner, in particular under pressure, until the cavity is completely filled with the fluid material. In particular, the cavity is subsequently cooled by e.g. running a cooling liquid through cooling channels within the injection mold, preferably while the hot runner is still heated. In another variant - with LSR material - the cavity is subsequently heated, e.g. by running an electrical current through electrical heating wires within the injection mold, while the cooled runner is cooled.

After the material within the cavity is hardened, forming the molded part, the threading insert is retracted from the molded part, while the molded part remains, in particular unmoved, within the cavity.

Thereafter, the demolding element is moved, to move the molded part out of the cavity, in particular either through the first opening or the second opening. Further details of the variants are described below. This movement is facilitated, as the feed channel will not leave a hardened sprue on the molded part.

Subsequently the molded part is ejected off the demolding element, e.g. into a container or onto a slide or a conveyor belt or a gripper.

Through the inventive arrangement, like the placement of the injection opening, the use of a feed channel, and by providing a threading insert and a demolding element, the injection mold itself, while completely surrounding the molded part, does not need to be opened for a demolding operation. Thus, the injection mold does not need to be movable or have movable parts at all. In particular, the large pressure forces of the fluid material within the cavity (up to 1000 bar) are primarily orthogonal to the axis of movement of the movable parts. This enables the injection mold to absorb a significant part of these pressure forces, while only a comparably small part acts on the movable parts like the threading insert and the demolding element. Thereby the movable parts of the inventive tool can be operated mechanically with limited power and compact drives.

As the injection is performed laterally with a feed channel being a hot runner or a cooled runner, contrary to e.g. an injection via a core element or an end region of a conventional cavity, thin tubular parts can be produced without the need for subsequent cutting of the part.

The use of the feed channel also prevents the formation of a sprue on the molded part and thus the molded part can simply be pushed or pulled out of the cavity. As the feed channel is leading up to a lateral injection opening, the feed channel and associated components can be placed in a region of the injection mold that is not used by any movable core or closure components. This way the feed channel can be comparably large compared to the molded part, allowing for the production of particularly small molded parts.

Hence, the inventive injection molding tool enables an especially efficient production particularly of relatively small hollow parts, omitting the need for subsequent cutting operations, and significantly simplifying the demolding of the molded part.

The inventive tool may be a compact standalone device and can be used without a conventional closing unit or clamp, having a greatly reduced space requirement e.g. within a production line.

Additionally, the smaller dimensions and power requirements of the movable parts also reduce the energy consumption of a production cycle rendering the inventive tool particularly energy efficient. The energy saving can amount to around 60% of the energy used by a conventional system.

Additionally, the inventive tool reduces the use of resin, as the resin remaining in the feed channel can be used for subsequent molding processes and no unusable excess resin is produced.

In a preferred embodiment of the invention, the demolding element of the mold closure is retractable out of the second opening of the cavity for pulling the molded part through the second opening in the demolding operation.

Being retractable preferably means that the demolding element is movably mounted to be movable in a direction that points from an end of the demolding element located in the cavity to a centroid of the demolding element. By being retractable, the demolding element can pull the molded part through the second end of the cavity, away from the threading insert and out of the injection mold.

In particular, the mold closure is movably mounted to be movable into an open configuration of the mold closure, preferably together with the demolding element. In this case, the demolding element is in particular not retracted alone, but as a part of the complete mold closure. Thereby, the mold closure opens up the second opening for the molded part to move through, particularly if the demolding element is a demolding core.

In particular, in the open configuration of the mold closure, a volume of empty space outside of the second opening corresponds to at least a volume of the molded part. Thereby, there is enough space for the molded part to be moved completely out of the cavity to be available for further processing.

Alternatively, in particular if the demolding element has a larger diameter than the molded part, the demolding element can be retracted without further parts of the mold closure moving.

By being retractable, the demolding element can pull the molded part into a space behind the second opening. Hence, the molded part is moved away from the threading insert without the threading insert having to release any space behind the first opening. Thereby, the injection molding tool becomes especially efficient and compact. This embodiment is particularly well suited for molded parts that have a cylindrical outer shape or taper towards a threaded end.

For an alternative to this implementation, see further below.

In a preferred embodiment of the invention, the injection molding tool comprises a movably mounted shielding, which is movable into a protective position, where the shielding shields the second opening of the cavity from the molded part during an ejection operation. In particular, the shielding is slidably mounted outside of the injection mold. The shielding may be driven pneumatically. In particular, the shielding completely blocks the injection mold, when the demolding element is retracted. The shielding may e.g. be mounted on a base element outside of the injection mold.

Preferably, in the protective position of the shielding, the shielding blocks a direct line of sight between the free end of the demolding element and the second opening.

Preferably, the shielding is moved into the protective position after the demolding element has been retracted and before the molded part is ejected off the demolding element. Thereby the shielding prevents the molded part from accidentally reentering the cavity, in particular from entering the injection mold, after its has been ejected off the demolding element.

This makes the injection molding tool particularly reliable. Alternatively, a shielding can be omitted, in particular when the demolding element is protractible (see below).

In an alternative preferred embodiment of the invention, the demolding element of the mold closure is protractible for, pushing the molded part through the first opening in the disengaged configuration of the threading insert.

Pushing in this case preferably means that the molded part is moved through the first opening while still attached to the demolding element, not yet being ejected off the demolding element.

Preferably, in this configuration, a holding thread engaging with a retracting thread of the threading insert is arranged on a movable carriage, configured to retract the threading insert from the disengaged configuration into an open configuration once the threading insert is unscrewed from the molded part using, e.g. a gear wheel. Thereby, enough space is freed behind the first opening for the molded part to be pushed through.

Particularly the demolding element is protractible such that a free end of the demolding element is outside of the cavity and has a distance to the first opening that corresponds at least to a length of the cavity between the first and the second opening, fully moving the molded part outside of the cavity.

This embodiment of the invention is particularly well suited for a molded part that tapers towards a free end opposite to a thread on the molded part.In a preferred embodiment of the invention, the threading insert comprises a threading core and the first threaded section is placed on a lateral surface of the threading core for defining an inner thread on the molded part. In a preferred embodiment, in the closed configuration of the injection molding tool, the threading core and the demolding element contact each other to enable the production of hollow molded parts. The threading core is in particular essentially cylindrical, with the first threaded section being a lateral cylinder surface section, preferably adjacent to free end of the threading core.

In particular, an axial length of the threaded section, measured along a threading axis of the first threaded section, is shorter than a maximum length of the cavity.

In a preferred version of this embodiment, the cavity comprises a stopping wall section adjacent to, and in particular surrounding, the first opening, wherein the stopping wall section is angled with respect to a threading axis of the first threaded section. Thereby, while unscrewing the threading core, the stopping wall section of the cavity will hold back the molded part within the cavity, ensuring a clean separation of the threading core and the molded part.

For an alternative embodiment see below.

In a further preferred embodiment of the invention, the threading insert comprises a threading sleeve, wherein the first or an additional second threaded section is placed on an inner lateral surface of the threading sleeve for defining an outer thread on the molded part. The threading sleeve preferably comprises a recess, in particular a cylindrical recess, where the first or the additional second threaded section is arranged on the inner lateral cylinder surface. In this embodiment, fluid material is also entering the recess within the threading sleeve. The threading sleeve and the threading core can both be implemented on the threading insert, to create a molded part that has both an inner and an outer thread. In this case, the first and the second threaded section preferably have the same pitch to allow an unscrewing from the molded part at the same rotational velocity.

The threading sleeve allows the injection molding tool to produce molded parts with outer threads in an efficient manner remaining a compact device.

In a preferred embodiment of all mentioned versions of the invention, starting from the first opening or the second opening and extending to the second opening or first opening respectively, a surface area of a cross section of the cavity orthogonal to an ejection axis either remains constant or decreases, wherein the wall segment of the cavity on which the injection opening is arranged, has a surface normal that is essentially orthogonal to the ejection axis.

In particular, along the ejection axis, any radius of the cavity orthogonal to the ejection axis remains constant or decreases.

This way the molded part will not be blocked by any region in the cavity when being moved along the ejection axis towards the respective opening.

Alternatively, the cavity might have a differing shape and the molded part can e.g. be rotated with the demolding element while being moved out of the cavity.

In a preferred embodiment of all other embodiments of the invention, the demolding element and the threading insert are oriented essentially horizontally. An essentially horizontal orientation here means that a longitudinal axis of the demolding element and, in particular a threading axis of the threading insert, is oriented essentially horizontally. In particular, also an ejection axis of the cavity is oriented essentially horizontally. Essentially horizontally preferably indicates that the respective component is oriented with an angle not greater than 20° with respect to a horizontal plane. The orientation referred to is preferably the orientation of the injection molding tool while it is in use.

An essentially horizontal orientation of the demolding element and the threading insert has the advantage that the molded part can be easily moved away from the injection mold by falling, as the falling direction is orthogonal to the orientation of the demolding element. This means that the molded element will move away from essentially all components of the injection molding tool when falling.

Alternatively, the injection molding tool can be oriented in another direction, e.g. when the molded part is guided by an airstream during the ejection.

In a preferred embodiment of the invention, the demolding element of the mold closure is axially aligned with the threading insert. In particular, a threading axis of the threading insert is aligned with a longitudinal axis, preferably a symmetry axis, of the demolding element.

In particular, when the demolding element is a demolding core, the alignment can be used to produce hollow cylinder symmetric parts.

Alternatively, the demolding element and the threading insert can be axially disaligned.

In a preferred embodiment of the invention, the mold closure comprises an ejector, in particular an ejector sleeve, which is movably mounted with respect to the demolding element to strip off the molded part off the demolding element. The ejector preferably comprises a contact region surrounding the demolding element, wherein the contact region is facing the inside of the cavity in the closed configuration of the injection molding tool and thus is in contact with the fluid material and the molded part. Preferably, the ejector is protractible towards and over a free end of the demolding element, to push the molded part off the demolding element. The ejector may in particular be coupled to a control link together with the demolding element, wherein the control link causes a movement of the ejector relative to the demolding element while a free end of the demolding element is outside of the cavity.

When the ejector is an ejector sleeve, an inner diameter of the ejector sleeve preferably corresponds to an outer diameter of the demolding element. An outer diameter of the ejector preferably corresponds to or is smaller than a diameter of the second opening of the cavity.

The movably mounted ejector provides a reliable and robust mechanism to eject the molded part off the demolding element, once the demolding element has moved the molded part out of the cavity. Thereby the molded part easily becomes available for further processing after the molding process, without e.g. complicated handling devices.

Alternatively, e.g. a robot or a handling device can pull the molded part off the demolding element after the molded part was moved out of the cavity.

In a preferred embodiment of the invention, the mold closure comprises a closure sleeve engaging with the injection mold in the closed configuration of the injection molding tool. Particularly when the demolding element is configured to be retractable, the closure sleeve is preferably also configured to be retractable form the injection mold. For this purpose, the closure sleeve preferably is connected either to the demolding element or to a control link together with the demolding element and in particular also the ejector.

The closure sleeve preferably surrounds the demolding element and particularly also the ejector. The closure sleeve in particular fits into a closure accommodation recess within the injection mold, wherein the closure accommodation recess is adjacent to the cavity, with the second opening being arranged between the cavity and the accommodation recess. In particular, an outer contact surface of the closure sleeve corresponds to an inner surface of the accommodation recess. In particular, the closure sleeve comprises a contact surface region that faces the inside of the cavity in the closed configuration of the injection molding tool, which surface region comes into contact with the fluid material or the molded part. Preferably, the closure sleeve comprises regions with an outer diameter that is larger than a diameter of the second opening of the cavity.

In the case of a protractible demolding element, the closure sleeve can e.g. be connected to the injection mold by a threading on the closure sleeve or by threaded bolts, allowing easy access for maintenance operations, while remaining unmoved during normal operation of the injection molding tool.

Preferably, the closure sleeve comprises a same material as the cavity.

The closure sleeve allows for a reliable closure of the second opening of the cavity while allowing access to the opening either during a demolding process or during maintenance operations. Especially for a retractable demolding element, the closure sleeve allows in a robust manner to free up enough space outside of the cavity for the molded part to leave the cavity and also the be ejected off the demolding element.

Alternatively the mold closure can be realized without a closure sleeve, e.g. with an appropriately shaped demolding element.

In a preferred embodiment of the invention, an outer shape of the closure sleeve is frustoconical. Preferably, a region adjacent to a free end of the closure sleeve and being closest to the injection mold is frustoconical. Preferably, the outer shape of the closure sleeve is defined by a decreasing wall thickness towards the cavity, while an inner diameter of the closure sleeve remains constant. In particular, an accommodation space of the injection mold for the closure sleeve correspondingly opens up in a funnel shape. Preferably, the outer shape of the closure sleeve has a cone angle in the range of 5° to 45°.

A frustoconically shaped closure sleeve has the advantage that the mold closure, including the demolding element, self-aligns with respect to the injection mold and the cavity, enabling particularly precise production parameters and dimensions. Additionally a frustoconical shape insures a particularly tight sealing between the mold closure and the injection mold with a still compact mold closure. Further, the pointed shape of the frustoconical closure sleeve allows a placement of the mold closure close to the injection opening (as within a comparably short cavity), while leaving enough space for the feed channel and all associated components of the feed channel, like heating wires or cooling channels and casing. Therefore, a frustoconically shaped closure sleeve allows for the production of particularly small molded parts.

Alternatively, the closure sleeve can e.g. have a cylindrical outer shape with a constant outer diameter.

In a preferred embodiment of the invention, a needle valve is placed at the injection opening. In particular, the needle valve is placed at the end of the feed channel. The needle valve serves to close the feed channel after fluid material has been injected into the cavity. The needle valve is preferably electrically controlled.

Particularly, the needle valve comprises a valve pin that is configured to be partially retractable into an expansion configuration of the needle valve. During the hardening of the fluid material, the needle valve is brought into the expansion configuration by retracting the valve pin out of an outer diameter of the molded part. This allows the fluid material to fully expand into a round or cylindrical shape at the place of the injection opening, omitting any shape deviations at the injection opening.

Alternatively, the injection molding tool can be constructed without a needle valve, e.g. comprising a hot runner or a cooled runner with an open nozzle.

In a preferred embodiment of the invention, the injection molding tool comprises a movably mounted mechanical lock, in particular movably in a direction perpendicular to a direction of movement of the demolding element, which, in a closed position of the mechanical lock, stops the mold closure from opening due to pressure within the cavity during a molding operation. Preferably, the mechanical lock is part of a control link controlling and causing movement of the demolding element. The mechanical lock may in particular comprise a segment of a control link with a slit section that is essentially perpendicular to an axis of the demolding element. This slit section may be a continuation of a slit that is controlling and causing a movement of the demolding element, when the control link is moved. In this case, the demolding element is slidably coupled with the slit and when the control link is moved into the closed position, the slit will hinder any free movements of the demolding element and absorb any axial forces on the demolding element.

Alternatively or additionally, the mechanical lock can also comprise a movably mounted pin that is moved into a hole within the demolding element for locking the demolding element.

The inventive injection molding tool does not need the strong force provided by conventional closing units. Experiments have shown that, in particular for comparably small molded parts, a mechanical lock is sufficient for closing the injection molding tool, while being significantly smaller than a conventional closing unit.

Alternatively, the demolding element may e.g. be moved by a threading or locked hydraulically.

In a preferred embodiment of all above embodiments, the cavity is a first cavity of a plurality of cavities within the injection mold and the plurality of cavities consist of at least 2, in particular at least 4, preferably at least 16, cavities that are arranged in parallel to each other.

Preferably, the plurality of cavities are of corresponding shape to each other. In particular, the injection molding tool also comprises a plurality of corresponding demolding elements and threading cores. The plurality of demolding elements may be movable by a single drive unit that is coupled to the demolding elements via a control link or via a plurality of coupled control links, enabling a synchronized production of a plurality of molded parts with one compact injection molding tool.

The plurality of cavities can be arranged adjacent to each other in one (e.g. horizontal) plane or in several planes, e.g. with a first group of 4 cavities lying in a first plane and an additional second group of 4 cavities lying in a parallel second plane above the first plane, wherein the cavities of the two planes have corresponding positions to each other. In this case, an injection opening of each cavity of the first or the second group is placed such that it is arranged on a wall segment that is on a far side with respect to the second or first group. Thus, feed channels leading to the injection openings do not have to cross the planes.

As the inventive injection molding tool is particularly compact, a greater number of parallel cavities will still only require limited production area and enable a fast and parallel production of similar molded parts or even parts of differing shapes.

Alternatively, the injection molding tool might only comprise one cavity.

In the following preferred embodiments of the inventive process, in particular using the inventive injection molding tool, are discussed.

In a preferred embodiment of the invention, the feed channel runs vertical above the cavity and the injection opening is arranged on an upper side of the cavity. Preferably, the feed channel runs straight out of the injection mold for being connectable to a vertical injection unit. In particular, a vertical injection molding system comprises the inventive injection molding tool connected to the vertical injection unit.

Such a vertical injection unit is transporting the fluid material, in particular molten pellets or LSR material, in a mainly vertical direction, in particular downwards, into the injection mold.

The manifold and vertical feed channel above the cavity allows a vertical injection unit above the injection molding tool, allowing the injection molding tool to be used in a particularly compact setting only requiring minimal production space, while allowing for an efficient and fast production of especially small molded parts.

In a preferred embodiment of all described embodiments, the mold closure has a contact surface, which contact surface comes into contact with fluid material when the cavity is filled with the fluid material, an axial surface projection of the contact surface along a direction of movement of the demolding element corresponding to a maximum of 30%, preferably of 20%, of a total contact surface of the fluid material within the cavity.

The contact surface in particular comprises all surface sections of the mold closure that are in contact with fluid material, when the cavity is completely filled. The total contact surface of the fluid material within the cavity in particular corresponds to the total surface area of the molded part. The axial surface projection means a projection of the contact surface of the mold closure onto a plane that is orthogonal to the direction of movement of the demolding element, in particular orthogonal to a longitudinal axis of the demolding element.

The contact surface of the mold closure is e.g. significantly reduced, if surface sections of the demolding element, in particular as a demolding core, are in contact with the threading insert within the cavity, e.g. for defining a through hole within the molded part. These surface sections of the demolding element are not part of the contact surface as they are not in contact with fluid material and hence the contact surface is reduced.

The amount of pressure force from the fluid material that is pushing the mold closure along its direction of movement depends on the size of the axial surface projection of the contact surface of the mold closure.

Choosing the geometry for the mold closure to have a maximum of 30%, preferably of 20%, of a total contact surface of the fluid material within the cavity, reduces the force on the mold closure sufficiently to use a mechanical closing mechanism, even for pressures as high as 1000 bar inside the cavity, while still allowing a production of a variety of valuable products.

Alternatively, the mold closure can have a differently sized contact surface.

In a preferred embodiment of the inventive process, the demolding element is retracted away from the threading insert and pulls the molded part out of the cavity.

Preferably, the demolding element is retracted together with a mold closure of the injection molding tool.

Retracting the demolding element away from the threading insert and out of the cavity after the threading insert has been disengaged is an efficient way of demolding the molded part from the cavity, needing minimal movement of the threading insert and no opening of the injection mold itself. The retraction also allows e.g. maintenance access to the cavity after the demolding as the cavity remains empty. This could advantageously be used for a cleaning cycle after the demolding.

In a preferred embodiment of the invention, before ejecting the molded part off the demolding element, a shielding is moved into a protective position where the shielding protects the cavity from the molded part. Preferably, the shielding is moved into the protective position after the demolding element has been retracted from the cavity. The shielding is in particular slided into the protective position. The shielding then stays in the protective position until the molded part was ejected off the demolding element.

After the ejection of the molded part, the shielding can e.g. again be withdrawn from the protective position into a withdrawn position.

Using the shielding protects the cavity, and preferably the whole injection mold, from an unwanted reentry of the molded part, making the process particularly reliable and robust.

Alternatively the use of a shielding can be omitted, e.g. when retracting the demolding element far enough from the cavity or when the demolding element is protracted.

In a preferred alternative to the above embodiment, the demolding element is protracted towards the threading insert and pushes the molded part out of the cavity. Pushing in this context preferably means that the molded part remains attached to the demolding element during the protraction also outside of the cavity. In particular before the demolding element is protracted, the threading insert is retracted far enough into an open configuration for the molded part outside of the cavity to fit between the cavity and the threading insert.

Protracting the demolding element towards the threading insert allows for cavity geometries and thereby part geometries that could not be pulled out of the cavity, like a growing diameter towards a threaded end of the molded part.

In a preferred embodiment of the invention, for bringing the injection molding tool into a closed configuration, a mold closure is moved to close the opening of the cavity and a mechanical lock is moved, in particular in a direction perpendicular to a direction of movement of the mold closure, into a closed position to stop the mold closure from opening due to pressure from the fluid material within the cavity.

Details of such a mechanical lock have already been described above.

Using a mechanical lock for the mold closure is less complex and faster than a conventional closing unit while still offering enough stability for molded parts, in particular for comparatively small molded parts, like e.g. Luer lock fittings or pencil tip cones.

In a preferred embodiment of the invention, the threading insert is unscrewed from the molded part while the threading insert is retracted. Thus, the threading insert is rotated during its retraction to unscrew its threaded section from the molded part. This is a particularly stable and reliable way of retracting the threading insert from the molded part, as the molded part remains unmoved within the cavity and is preferably hindered from rotation either by the demolding element or the cavity itself.

In particular before the demolding element is protracted, the threading insert is unscrewed from the molded part up until the threading insert reaches a disengaged configuration, after which the threading insert is pulled back into an open configuration, e.g. by a carriage, without further rotation. This way the threading insert opens up a space behind the cavity in a particularly efficient way.

Retracting the threading insert before demolding the molded part allows a stable and efficient axial demolding process.

Alternatively, the threading insert may be collapsible or expandable to disengage from the molded part and then retract after disengagement.

Further advantageous embodiments and combinations of features of the invention result from the following exemplary embodiments and the set of patent claims as a whole.

### Brief description of the drawings

The drawings used to illustrate the exemplary embodiments show:
- Fig. 1: A cross section of several components of a first inventive injection molding tool;
- Fig. 2: a cross section of an injection mold of the first injection molding tool isolated from other components;
- Fig. 3: a cross section of the first injection molding tool also schematically showing the hot runner unit;
- Fig. 4: a cross section of the first injection molding tool with the threading insert 130 untrimmed for highlighting its shape;
- Fig. 5: an exploded view of a threading insert of the first injection molding tool and its mounting system;
- Fig. 6: a cross section of the first injection molding tool, wherein a demolding core as part of a mold closure is untrimmed for highlighting its shape;
- Fig. 7: an exploded view of the mold closure of the first injection molding tool;
- Fig. 8: the mold closure of the first injection molding tool and a control link;
- Fig. 9: an isometric view of the injection molds of the first injection molding tool;
- Fig. 10: an isometric view of the complete first injection molding tool;
- Fig. 11: an isometric top view of an injection molding system comprising a further injection molding tool and a vertical injection unit;
- Fig. 12a-d: a first inventive process for the production of molded part 1 through injection molding;
- Fig. 13: a further inventive injection molding tool with a threading insert that differs from the threading core of the first injection molding tool, and
- Fig. 14a-e: a further inventive injection molding tool and a corresponding process for the production of a molded part.

In general, identical parts are marked with the same reference symbols in the figures.

### Ways to carry out the invention

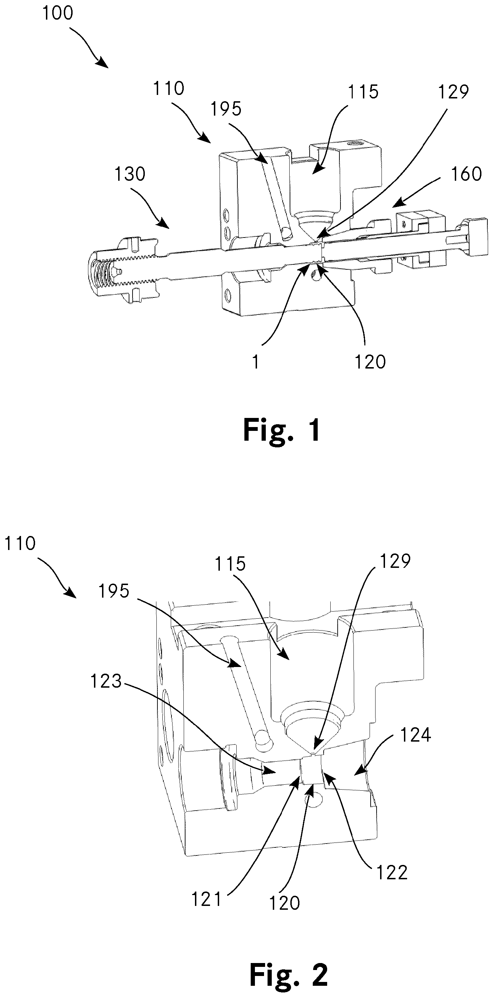

Fig. 1 to Fig. 12 show a first inventive injection molding tool 100. Fig. 1 shows a cross section of several key components of the injection molding tool 100 allowing a fast and reliable production of a molded part 1 by injection molding within a cavity 120. The molded part 1 is part of a Luer lock fitting and has a tubular shape with an inner threading along most of its length. The molded part 1 has an outer diameter of about 10 mm and a length of about 8 mm.

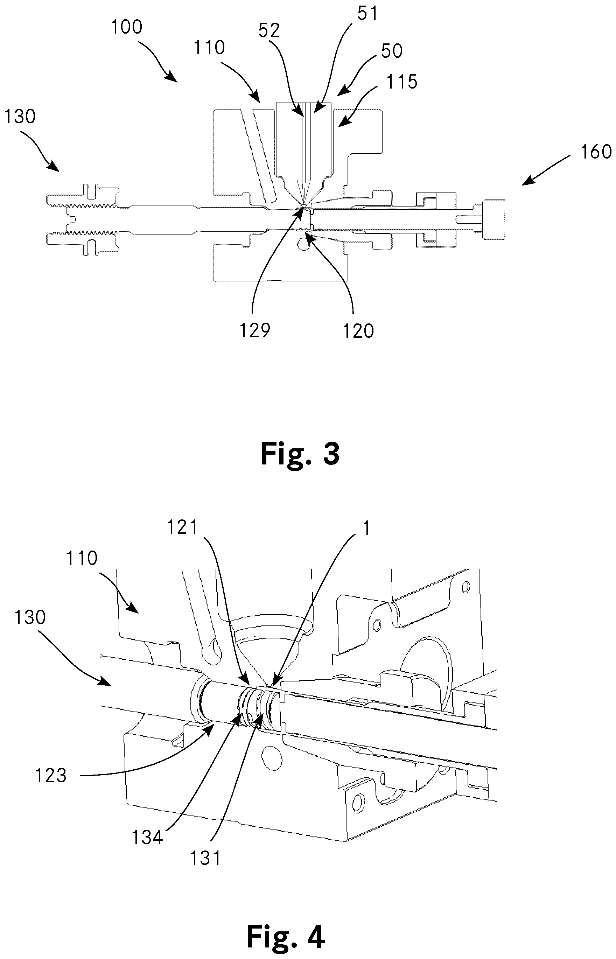

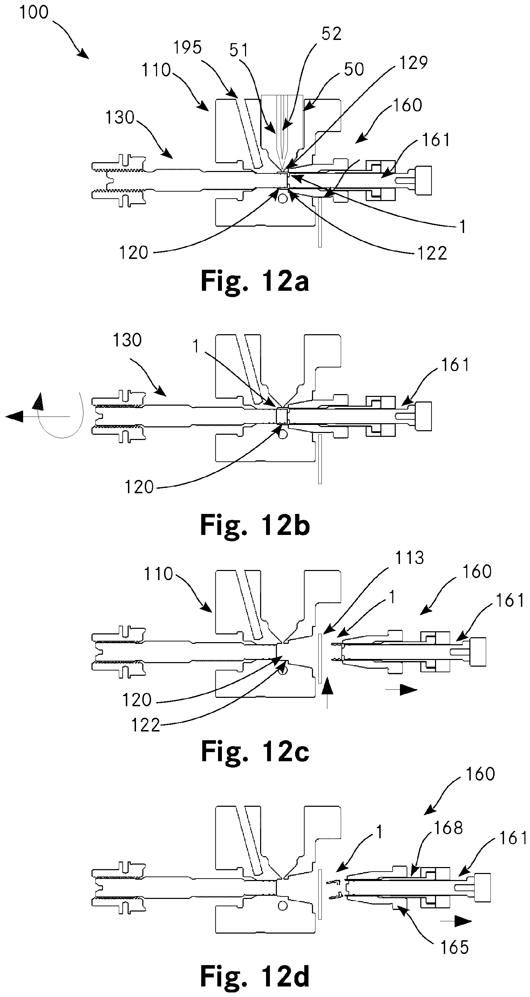

To produce molded part 1, molten polycarbonate is injected into the cavity 120 through an injection opening 129 and cooled down to harden (for further details of the process, see below and Fig. 12a to Fig. 12d). For this purpose, in a closed configuration of the injection molding tool 100 (as shown in Fig. 1), the cavity 120 together with a threading insert 130 and a mold closure 160 corresponds to a negative of the shape of the molded part 1. Injection opening 129 is placed on a wall segment of the cavity 120 defining an outer lateral surface section of the molded part 1. To transport the fluid material to the cavity 120, the injection molding tool 100 comprises a hot runner 51 (Fig. 3) that leads up to the injection opening 129. To cool down the fluid material within the cavity 120 sufficiently, the injection mold 110 comprises a straight cooling channel 195 for cooling oil, leading from outside of the injection mold 110 up to the cavity 120.

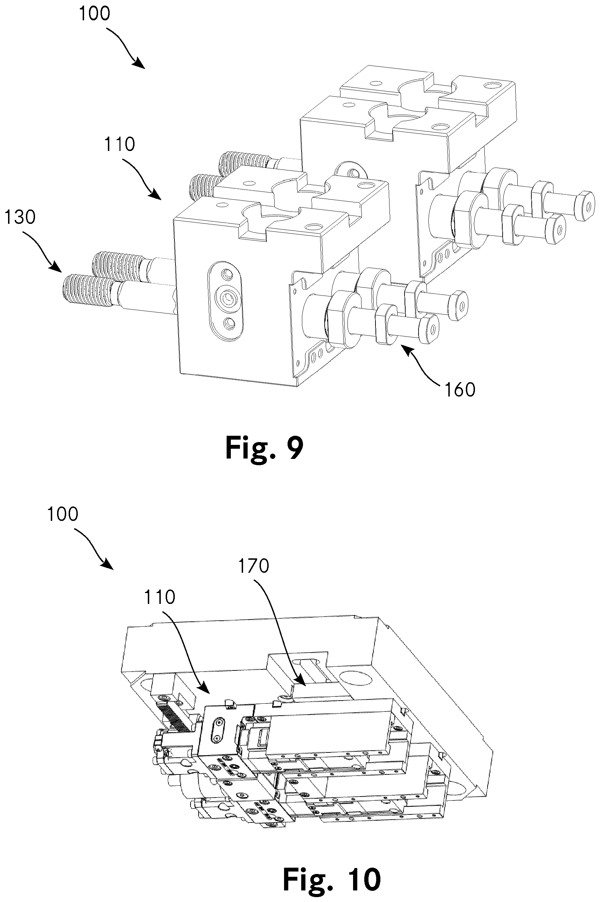

Fig. 2 shows the injection mold 110 in a similar cross section as Fig. 1 isolated from other components of the injection molding tool 100. Fig. 9 and Fig. 10 show the injection mold 110 from an outside view. The injection mold 110 consists of one essentially rectangular cuboid piece of stainless steel with several openings and through holes for further components of the injection molding tool 100. Injection mold 110 has a horizontal width of around 70 mm and a vertical height of around 70 mm and a horizontal length (along the length of the cavity 120) of around 50 mm at the height of the cavity 120.

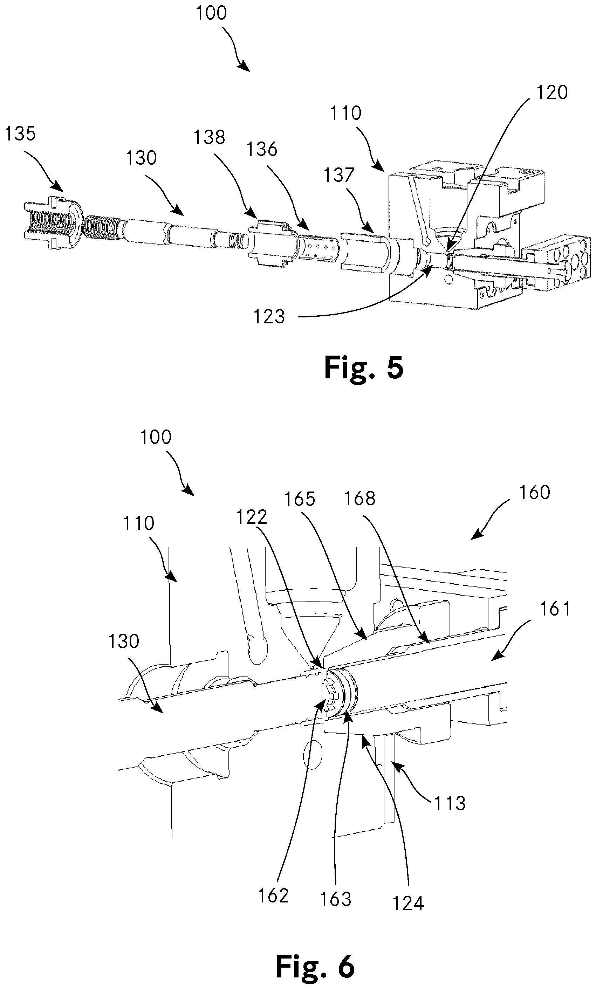

Cavity 120 is essentially cylinder-symmetric (except for the injection opening 129) and arranged in a lower half of the injection mold 110 being a central section of a horizontal through hole within injection mold 110. Besides the injection opening 129, cavity 120 has a first opening 121 at a first longitudinal end and a second opening 122 at a second longitudinal end of cavity 120. The first and the second opening 121, 122 correspond to the outer shape of the two longitudinal ends of molded part 1. The length of the cavity between the first opening 121 and the second opening 122 is around 6 mm and the diameter of the cavity 120 corresponds to the diameter of the molded part 1. The length of the cavity 120 is smaller than the maximum length of the molded part 1, as part of the fluid material also enters the mold closure 160 (see Fig. 6).

The maximum length of the injection mold 110 (on its upper part) corresponds to around ten times the length of the cavity 120 between the first and the second opening 121, 122 and the height of injection mold 110 corresponds to around ten times the diameter of the cavity 120. Outside of the first opening 121 is an essentially cylinder-symmetric threading insert guiding space 123 with the same diameter as the first opening 121 and around twice the length of the cavity 120. Behind the threading insert guiding space 123 and leading up to an outer surface of the injection mold 110 is a further accommodation space for a mounting sleeve of the threading insert 130 (Fig. 4 and Fig. 5). Outside of the second opening 122 and opening up to an outer surface of the injection mold 110 is a funnel-shaped mold closure accommodation space 124 with around twice the length of cavity 120. Above the cavity 120 and leading from an upper outer surface of the injection mold 110 to the injection opening 129 is a hot runner cut out 115 to accommodate a hot runner unit 50 (Fig. 3). Injection mold 110 accommodates a further cavity at the same height and parallel to cavity 120 (visible in. Fig. 9).

Fig. 3 shows a direct view on a cross section similar to the cross section from Fig. 1, also schematically showing the hot runner unit 50 within the vertical hot runner cut out 115 above cavity 120. In itself units like the hot runner unit 50 are known. The hot runner unit 50 is cylinder-symmetrical around a central and vertical hot runner axis. The casing of hot runner unit 50 is cylinder shaped over most of its vertical length until it tapers towards the injection opening 129 and it has a maximum diameter that corresponds to around four times the length of the cavity 120. Centrally inside the hot runner unit 50 is hot runner 51, a heatable channel made up of inner wall sections of the hot runner unit 50. Between its outer surface and the hot runner 51, hot runner unit 50 comprises electrical heating wires to heat up the hot runner 51 in an in itself known manner. Centrally inside hot runner 51 and axially aligned with hot runner 51, the hot runner unit 50 comprises an axial movably mounted and electrically driven valve pin 52, forming a needle valve at a lower exit nozzle of hot runner 51 at the injection opening 129. When the valve pin 52 is moved upwards the valve is opened and when the valve pin 52 is moved into the nozzle of hot runner 51 the valve closes.

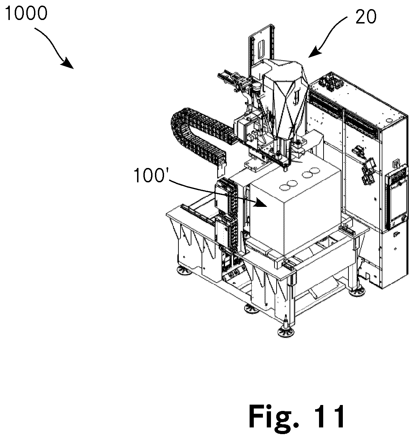

Hot runner unit 50 is longer than schematically shown in Fig. 3 (in total around three times the height of injection mold 110) and leads up to an uppermost surface of injection molding tool 100 to be connectable to an injection unit 20 (Fig. 11).

Fig. 4 shows a cross section of injection tool 100 similar to Fig. 1 but with the threading insert 130 untrimmed for highlighting its shape. The movably mounted threading insert 130 serves as a core within cavity 120 and defines a recess with an inner threading on molded part 1. In the closed configuration of the injection molding tool 100, threading insert 130 penetrates the first opening 121 and reaches into the cavity 120, filling around 90% of the cavity's length. The part of threading insert 130 that is penetrating the first opening 121 has a cylinder shape with an outer diameter that corresponds to the diameter of the first opening 121 (around 80% of the outer diameter of part 1). At a free end of the threading insert 130 und up to the first opening 121 the threading insert 130 comprises an outer threaded section 131 defining the inner threading on molded part 1. Behind the first opening 121, the threading insert 130 features a sealing region 134 with riffles on its surface that are in contact with the walls of the threading insert guiding space 123 to seal the cavity 120 against leakage of the fluid material. Outside of the threading insert guiding space 123 the threading insert 130 increases in diameter.

Fig. 5 shows the injection molding tool 100 in an exploded view of the threading insert 130 and its mounting system. Threading insert 130 has a longitudinal length of around twice the length of injection mold 110 at the height of cavity 120. Threading insert 130 is rotationally and slidably mounted with respect to the injection mold 110, by means of a mounting sleeve 137 and a ball guide bush 136 between the threading insert 130 and the mounting sleeve 137. A rotational force is transmitted to the threading insert 130 by a gear wheel 138 outside of injection mold 110 and adjacent to the mounting sleeve 137, in which the threading insert 130 is slidably held. Gear wheel 138 is engaging with a section of the threading insert 130 that is not fully rotationally symmetric but features two opposing flattened sections on its surface. Hence, a rotation of the gear wheel 138 will cause a rotation of the threading insert 130. The gear wheel 138 is rotated by means of further gear wheels and an electric motor. A rear end of threading insert 130 comprises a rear threaded section with a length of around four times the length of cavity 120, the threaded section engaging a guide nut 135. The rotation of the threading insert 130, caused by gear wheel 138 is translated into a simultaneous translational movement along a longitudinal axis of the threading insert 130 by guide nut 135. Thus threading insert 130 is retractable und unscrewable from the molded part 1 into a disengaged configuration of the threading insert 130 by rotating gear wheel 130. During a molding process, the rear threaded section is transmitting axial forces from the fluid material onto the threading insert 130 further onto the guide nut 135, thus preventing any unwanted movement of the threading insert 130.

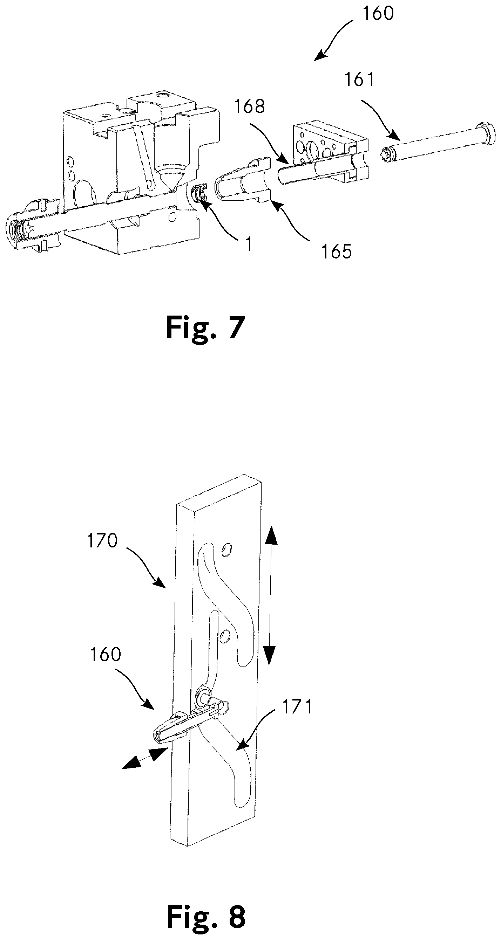

Fig. 6 shows the injection molding tool 100 in its closed configuration in a similar cross section as Fig. 4, wherein a demolding core 161 as part of the mold closure 160 is untrimmed for highlighting its outer shape. Demolding core 161 is penetrating the second opening 122 of the cavity 120 (see e.g. Fig. 2) and reaches into the cavity 120 for about 10 % of its length, directly contacting threading insert 130 and thereby, together with threading insert 130, defining a complete through hole within molded part 1. The body of demolding core 161 is essentially cylindrical (see Fig. 7) and its maximum outer diameter essentially corresponds to the outer diameter of the tip of threading insert 130. A maximum length of the demolding core 161 is about 70% of the length of the threading insert 130. The part of the demolding core 161 that penetrates the second opening 122 has a maximum outer diameter that corresponds to around 80% of the outer diameter of threading insert 130 and comprises a holding section 162. Holding section 162 is in contact with the fluid material, thus shaping the molded part 1. Its shape is gear wheel like and thereby defines grooves within the molded part 1 that engage with the holding section 162. When threading insert 130 rotates, holding section 162 prevents molded part 1 from rotating within the cavity and thereby ensures that the threading insert 130 can be unscrewed from the molded part 1 to move into its disengaged configuration.

Behind the holding section 162, demolding core 161 has a riffled outer sealing section 163 engaging with an inner surface of an ejecting sleeve 168 surrounding the demolding core 161.

In the closed configuration of the injection molding tool 100, ejector sleeve 168 contacts the fluid material within cavity 120, thus taking part in closing the cavity 120. In the region of injection mold 110, ejector sleeve 168 has an outer diameter that corresponds to the diameter of the second opening 122. Further outside, the wall thickness of the ejector sleeve 168 increases to about three times the thickness at the cavity 120, also increasing the outer diameter of the ejector sleeve 168. At a rear end, ejector sleeve 168 is held inside holding plates that are mounted movably with respect to the other components of the mold closure 160. By moving ejector sleeve 168 and demolding core 161 relative to each other, the molded part 1 can be ejected off the demolding core 161 (for further details of the process, see below). Around the ejector sleeve 168, the mold closure 160 comprises closure sleeve 165. In the closed configuration of injection molding tool 100, closure sleeve 165 contacts the mold closure accommodation space 124 of the injection mold 110. The outer shape of closure sleeve 165 is frustoconical with an inner cone angle of 10°. For about half of its length on the rear side, the closure sleeve 165 has an enlarged inner diameter, allowing accommodating the region of greater wall thickness of the ejector sleeve 168. The outer diameter of the closure sleeve 165 at the tip is around 20% larger than the diameter of the second opening 122.

The mold closure 160 is movably mounted to be retractable into an open configuration of the mold closure 160. While the closure sleeve 165 and the demolding core 161 are fixed relative to each other, the ejector sleeve 168 is additionally movably mounted with respect to the other components of the mold closure 160 for ejecting the molded part 1 off the demolding core 165. Fig. 6 also shows a shielding 113 that is movable into a protective position when the mold closure 160 was retracted (see Fig. 12 b).

To move the mold closure 160, it is engaged with a movably mounted control link 170 as schematically shown in Fig. 8. Control link 170 is movable in a direction orthogonal to the direction of movement of the mold closure 160 and coupled to an electric motor. The mold closure is connected to a connector piece that is slidably mounted within a cam 171 of the control link 170. When the electric motor moves control link 170, the geometry of the cam 171 will force the mold closure to move as well. At its longitudinal ends, the cam 171 comprises sections that are parallel to the direction of movement of the control link 170. When the control link 170 is moved into a position such that the connector piece is arranged in such a section (as shown in Fig. 8) the mold closure 160 is locked in place. Therefore, control link 170 also serves as a mechanical lock that stops the mold closure 160 from opening due to pressure within the cavity 120 during a molding operation.

Fig. 9. shows an isometric view of all injection molds of injection molding tool 100, with injection mold 110 and a further injection mold comprising in total four parallel cavities for the production of molded parts within injection molding tool 100. Correspondingly the injection molding tool 100 features in total four threading inserts of the type of threading insert 130 and also four mold closures of the type of mold closure 160. The two injection molds are arranged adjacent to each other and on the same height.

Fig. 10 is an isometric view of the complete injection molding tool 100. The injection mold 110 and the further injection mold are mounted on a common base block on their top surface, the base block also accommodating the control link 170. All four mold closures are coupled to one control link 170, allowing a synchronous production of four molded parts. The four threading inserts are also coupled together, being moved by a single electric motor.

Fig. 11 shows an isometric top view of an injection molding system 1000 comprising an injection molding tool 100' and a vertical injection unit 20. Injection molding tool 100', only shown schematically, is of the same type as injection molding tool 100 of Fig. 1 to Fig. 10. The vertical injection unit 20 injects fluid material into the upper opening of the hot runners of injection molding tool 100'. For this purpose, injection unit 20 comprises a movable injection head. Injection molding system 1000 does not need any further components (except for material and an electricity supply) and is particularly compact compared to conventional systems with closing units.

Fig. 12a to Fig. 12d illustrate an inventive process for the production of molded part 1 through injection molding using the injection molding tool 100. In a first step of the process, injection molding tool 100 is brought into a closed configuration as shown in Fig. 12a. The threading insert 130 is completely moved into the cavity and the mold closure 160 closes the second opening 122 of the cavity 120. Thereby, except for the injection opening 129, the cavity 120 is completely enclosed, defining the shape of molded part 1. Control link 170 (shown in Fig. 8) is moved into a closed position, locking the mold closure 160 in place. Additionally a mechanical locking pin (not shown) can be moved into a locking position to further protect mold closure 160 from opening under the high pressure of the fluid material. When the injection molding tool 100 is in the closed configuration, fluid material is injected into the cavity 120 under high pressure (around 1000 bar). For this purpose, the hot runner 51 within hot runner unit 50 is heated and valve pin 52 is raised to allow the fluid material to flow through the injection opening 129 and into cavity 120. When the injection is completed, valve pin 52 is lowered to close the injection opening 129. Subsequently, a cooling oil is run through cooling channel 195 to cool down the fluid material below its freezing temperature, forming molded part 1. During the hardening of molded part 1, valve pin 52 of the hot runner unit 50 is raised out of the cavity 120, allowing the material of molded part 1 to expand into its final shape, while still closing hot runner 51. The shape of threading insert 130 and demolding core 161 are defining a partially threaded through hole within molded part 1. When molded part 1 is sufficiently hardened, the demolding procedure starts.

Fig. 12b depicts the first step in the demolding process: Threading insert 130 is retracted under rotation to unscrew from the molded part 1 moving the threading insert 130 into a disengaged configuration while molded part 1 remains in its position within cavity 120. Demolding core 161 with its holding section 162 (Fig. 6) is preventing molded part 1 from rotating within cavity 120. Subsequently, as shown in Fig. 12c, the mold closure 160, together with demolding core 161, is moved axially away from the injection mold 110. As the molded part 1 is attached to the demolding core 161, molded part 1 is moved out of the second opening 122 of cavity 120 and out of the injection mold 110. When the mold closure 160 is sufficiently far away from injection mold 110, shielding 113 is brought into a protective position, to shield the cavity 120 and the complete injection mold 110 from molded part 1 before ejection.

In the last step, depicted in Fig. 12d, demolding core 161 and closure sleeve 168 are retracted further without ejector sleeve 168 following. Thereby ejector sleeve 168 pushes the molded part 1 off demolding core 161, causing molded part 1 to fall in a direction orthogonal to the axis of demolding core 161. Molded part 1 can then e.g. be collected in a reservoir or directly fall onto a slide towards a conveyor belt for further processing, like e.g. coating, washing and packaging.

As no residual material will remain in the hot runner, injection molding tool 100 can be immediately brought back into the closed configuration shown in Fig. 12a, essentially by reversing the steps from Fig. 12b to Fig.12d, to start a new production cycle.

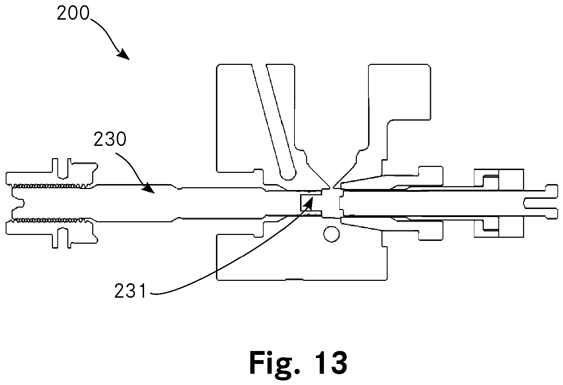

Fig. 13 depicts a second inventive injection molding tool 200 with a threading insert 230 that differs from threading insert 130 of injection molding tool 100. Threading insert 230 comprises a threading sleeve, wherein a threaded section 231 is placed on an inner lateral surface of the threading sleeve for defining an outer thread on an extrusion of the molded part. The demolding process can e.g. correspond to the process depicted in Fig. 12b to Fig. 12d.

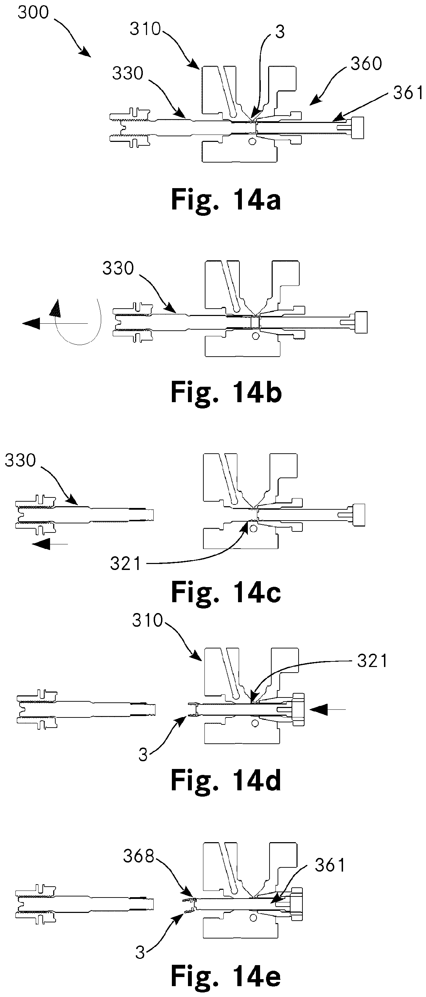

Fig. 14a to Fig. 14e show a third inventive injection molding tool 300 and a corresponding process for the production of a molded part 3. The shape of the cavity and the hot runner unit correspond to the respective components of injection molding tool 100. The injection mold 310 is similar to injection mold 110 but with an enlarged threading insert guiding space, that allows molded part 3 to be moved through a first opening 321 of its cavity. The threading insert guiding space of injection mold 310 has a minimum diameter that corresponds to the maximum diameter of its cavity. A threading core 330 has a section with enlarged diameter to seal the enlarged threading insert guiding space and is movably mounted to be movable into an open configuration (see Fig. 14c). Additionally in this embodiment of the invention, demolding core is mounted protractible and a mold closure 360 comprises an ejection pin 368.

Fig. 14a depicts injection molding tool 300 in a closed configuration and in a first step, molded part 3 is produced in a similar manner as described for molded part 1 and injection molding tool 100.

Subsequently, as shown in Fig. 14b, threading insert 330 is retracted and rotated to unscrew from molded part 3 into a disengaged configuration in a similar manner as with injection molding tool 100. In a following step, shown in Fig. 14c, threading insert 330, together with parts of its mounting system, is retracted into an open configuration, opening up a first opening 321 of the cavity and leaving enough space between the injection mold 310 and threading insert 330 for molded part 3. This movement of the threading insert 330 is caused by a movably mounted carriage that holds the mounting system of the threading insert 330. Thus, threading insert 330 is not rotating while moving into the open configuration.

Subsequently, as shown in Fig. 14d, demolding core 361 is protracted through the cavity and the threading insert guiding space, moving molded part 3 through the first opening 321 of the cavity and out of injection mold 310. Subsequently, shown in Fig. 14e, an ejection pin 368 is extended from the demolding core 361, to eject molded part 3 off demolding core 361. In this embodiment no shielding is needed, as the demolding core 361 itself protects the cavity.

The invention is not limited to the embodiments presented: The injection mold can have a differing outer shape and e.g. be cylindrical or even spherical. The injection mold can also e.g. be larger relative to the size of the cavity. The injection mold can comprise heating wires to heat up the cavity for LSR injection molding, in particular in a combination with a cooled runner. The cavity can be longer or shorter and have a different cross-sectional shape, e.g. cuboid or polygonal. It could for example have a cross sectional shape of a regular hexagon. The hot runner may be shorter and can e.g. also have turns. Instead of the hot runner the shown embodiments may comprise a cooled runner within a cooled runner unit. The cooled runner unit may have basically the same shape as the hot runner unit, but comprising cooling channels instead of heating wires.

The threading insert can have a different shape and e.g. feature several threaded sections, for example both an outer threaded section and an inner threaded section. The diameter of the threading insert may be smaller, e.g. 50% of a maximum diameter of the cavity. The shape and mounting of the threading insert may also vary, the threading insert can for example be shorter with respect to the injection mold and/or have a different outer diameter. The threading insert could also be collapsible without the need of a rotational movement. The mold closure could have a different demolding element, e.g. a demolding sleeve instead of a demolding core. The ejector could have a different shape and e.g. be a central ejector pin or a multitude of ejector pins. The mold closure does not necessarily comprise a closure sleeve, the closure could also be realized with a demolding core alone. The closure sleeve and the ejector sleeve could also be one part. The mold closure could be driven without a control link, using e.g. a stepper motor. The mechanical locking mechanism could be realized by e.g. move a locking pin into a recess within a component of the mold closure.

The injection molding tool could also only comprise one cavity or more than four cavities, e.g. 16 or 32 cavities. The displayed injection molding system could also differ and e.g. comprise a conventional horizontal injection unit.

In summary, it can be stated that the injection molding tool with the injection mold, the threading insert, the mold closure and the feed channel is compact, energy-efficient, flexible and simplifies the production process of molded parts, in particular of comparatively small molded parts with threads.

## Claims

1. Injection molding tool (100, 200, 300) for producing a molded part (1, 3), the injection molding tool (100, 200, 300) comprising
- an injection mold (110, 310) with a cavity (120) to define an outer shape of the molded part (1, 3), the cavity (120) having a first opening (121, 321) at a first end and a second opening (122) at a second end opposite to the first end;
- a threading insert (130, 230, 330), penetrating the first opening (121, 321) of the cavity (120) in a closed configuration of the injection molding tool (100, 200, 300), the threading insert (130, 230, 330) comprising a first threaded section (131, 231) to define a thread on the molded part (1, 3), the threading insert (130, 230, 330) being axially movably, and in particular rotationally movably, mounted with respect to the cavity (120) for being retractable from the molded part (1, 3) into a disengaged configuration of the threading insert (130, 230, 330), wherein the threading insert (130, 230, 330) is disengaged from the molded part (1, 3) in the cavity (120);
- a mold closure (160, 360) for closing the second opening (122) of the cavity (120) in the closed configuration of the injection molding tool (100, 200, 300), the mold closure (160, 360) comprising a movably mounted demolding element (161, 361), in particular a demolding core (161, 361), that is configured to move the molded part (1, 3) out of the cavity (120) in a demolding operation;
- an injection opening (129) for injecting fluid material into the cavity (120), the injection opening (129) being placed between the first and the second end of the cavity (120) on a wall segment of the cavity (120) defining an outer lateral surface section of the molded part (1, 3);
- a feed channel (51) leading to the injection opening (129) for transporting the fluid material to the cavity (120), wherein the feed channel (51) is either a hot runner (51) or a cooled runner.

2. Injection molding tool (100, 200) according to claim 1, **characterised in that** the demolding element (161) of the mold closure (160) is retractable out of the second opening (122) of the cavity (120) for pulling the molded part (1) through the second opening (122) in the demolding operation.

3. Injection molding tool (100, 200) according to claim 2, **characterised in that** the injection molding tool (100, 200, 300) comprises a movably mounted shielding (113) which is movable into a protective position, where the shielding (113) shields the second opening (122) of the cavity (120) from the molded part (1) during an ejection operation.

4. Injection molding tool (300) according to claim 1, **characterised in that** the demolding element (361) of the mold closure (360) is protractible for, in the disengaged configuration of the threading insert (330), pushing the molded part (3) through the first opening (321).

5. Injection molding tool (100 300) according to one of claims 1 to 4, **characterised in that** the threading insert (130, 330) comprises a threading core (130, 330) and wherein the first threaded section (131, 231) is placed on a lateral surface of the threading core (130, 330) for defining an inner thread on the molded part (1, 3).

6. Injection molding tool (200) according to one of claims 1 to 5, **characterised in that** the threading insert (230) comprises a threading sleeve, wherein the first or an additional second threaded section (231) is placed on an inner lateral surface of the threading sleeve for defining an outer thread on the molded part (1, 3).

7. Injection molding tool (100, 200, 300) according to one of claims 1 to 6, **characterized in that**, starting from the first opening (121, 321) or the second opening (122) and extending to the second opening (122) or first opening (121, 321) respectively, a surface area of a cross section of the cavity (120) orthogonal to an ejection axis either remains constant or decreases, wherein the wall segment of the cavity (120) on which the injection opening (129) is arranged, has a surface normal that is essentially orthogonal to the ejection axis.

8. Injection molding tool (100, 200, 300) according to one of claims 1 to 7, **characterised in that** the demolding element (161, 361) and the threading insert (130, 230, 330) are oriented essentially horizontally.

9. Injection molding tool (100, 200, 300) according to one of claims 1 to 8, wherein the demolding element (161, 361) of the mold closure (160, 360) is axially aligned with the threading insert (130, 230, 330).

10. Injection molding tool (100, 200, 300) according to one of claims 1 to 9, wherein the mold closure (160, 360) comprises an ejector (168, 368), in particular an ejector sleeve (168), which is movably mounted with respect to the demolding element (161, 361) to strip off the molded part (1, 3) off the demolding element (161, 361).

11. Injection molding tool (100, 200, 300) according to claim 1 to 10, wherein the mold closure (160, 360) comprises a closure sleeve (165) engaging with the injection mold (110, 310) in the closed configuration of the injection molding tool (100, 200, 300).

12. Injection molding tool (100, 200, 300) according to claim 11, **characterised in that** an outer shape of the closure sleeve (165) is frustoconical.

13. Injection molding tool (100, 200, 300) according to one of claims 1 to 12, **characterised in that** a needle valve is placed at the injection opening (129).

14. Injection molding tool (100, 200, 300) according to one of claims 1 to 13, **characterised in that** the injection molding tool (100, 200, 300) comprises a movably mounted mechanical lock (170), in particular movably in a direction perpendicular to a direction of movement of the demolding element (161, 361), which, in a closed position of the mechanical lock (170), stops the mold closure (160, 360) from opening due to pressure within the cavity (120) during a molding operation.

15. Injection molding tool (100, 200, 300) according to one claims 1 to 14, **characterised in that** the cavity (120) is a first cavity (120) of a plurality of cavities within the injection mold (110, 310) and that the plurality of cavities consist of at least 2, in particular at least 4, preferably at least 16, cavities that are arranged in parallel to each other.

16. Injection molding tool according to one claims 1 to 15, **characterised in that** the mold closure (160, 360) has a contact surface, which contact surface comes into contact with fluid material when the cavity (120) is filled with the fluid material, an axial surface projection of the contact surface along a direction of movement of the demolding element (161, 361) corresponding to a maximum of 30%, preferably of 20%, of a total contact surface of the fluid material within the cavity (120).

17. Process for the production of a molded part (1, 3) through injection molding, comprising the steps:
- providing an injection molding tool (100, 200, 300), the injection molding tool (100, 200, 300), in particular an injection molding tool (100, 200, 300) according to one of claims 1 to 15, comprising;
∘ an injection mold (110, 310) with a cavity (120);
∘ a threading insert (130, 230, 330) with a first threaded section (131, 231) to define a thread on the molded part (1, 3);
∘ a demolding element (161, 361) opposite to the threading insert (130, 230, 330);
∘ an injection opening (129) on a wall segment of the cavity (120) defining an outer lateral surface section of the molded part (1, 3);
∘ a feed channel (51) leading to the injection opening (129), wherein the feed channel (51) is either a hot runner (51) or a cooled runner;
- bringing the injection molding tool (100, 200, 300) into a closed configuration;
- injecting fluid material into the cavity (120) through the feed channel (51) and the injection opening (129);
- after the material is hardened, retracting the threading insert (130, 230, 330) from the molded part (1, 3);
- moving the molded part (1, 3) through an opening of the cavity (120) by moving the demolding element (161, 361);
- ejecting the molded part (1, 3) off the demolding element (161, 361).

18. Process according to claim 17, **characterised in that** the demolding element (161, 361) is retracted away from the threading insert (130, 230) and pulls the molded part (1) out of the cavity (120).

19. Process according to claim 18, **characterised in that** before ejecting the molded part (1) off the demolding element (161), a shielding (113) is moved into a protective position where the shielding (113) protects the cavity (120) from the molded part (1).

20. Process according to claim 17, **characterised in that** the demolding element (361) is protracted towards the threading insert (330) and pushes the molded part (3) out of the cavity.

21. Process according to one of claims 17 to 20, **characterised in that** for bringing the injection molding tool (100, 200, 300) into a closed configuration, a mold closure (160, 360) is moved to close the opening of the cavity (120) and a mechanical lock (170) is moved, in particular in a direction perpendicular to a direction of movement of the mold closure (160, 360), into a closed position to stop the mold closure (160, 360) from opening due to pressure from the fluid material within the cavity (120).

22. Process according to one of claims 17 to 21, **characterised in that** the threading insert (130, 230, 330) is unscrewed from the molded part (1, 3) while the threading insert (130, 230, 330) is retracted.
